Europäisches Patentamt

(19) European Patent Office    (11) Publication number: **0 011 423**
Office européen des brevets                                    **A2**

(12) **EUROPEAN PATENT APPLICATION**

(21) Application number: **79302430.8**          (51) Int. Cl.³: **C 25 B 9/00**
                                                         **//C25B1/26**
(22) Date of filing: **02.11.79**

(30) Priority: **03.11.78 US 957324**              (71) Applicant: **DIAMOND SHAMROCK CORPORATION**
                                                 **1100 Superior Avenue**
                                                 **Cleveland Ohio 44114(US)**

(43) Date of publication of application:
   **28.05.80 Bulletin 80/11**                   (72) Inventor: **Loeffler, John Edward, Jr.**
                                                 **7735 Eagle Mills Road**
                                                 **Willoughby Ohio(US)**
(84) Designated Contracting States:
   **AT BE CH DE FR GB IT LU NL SE**             (74) Representative: **Oliver, Roy Edward et al,**
                                                 **POLLAK,MERCER & TENCH High Holborn House 52-54**
                                                 **High Holborn**
                                                 **London WC1V 6RY(GB)**

(54) Stack pack electrolytic cell.

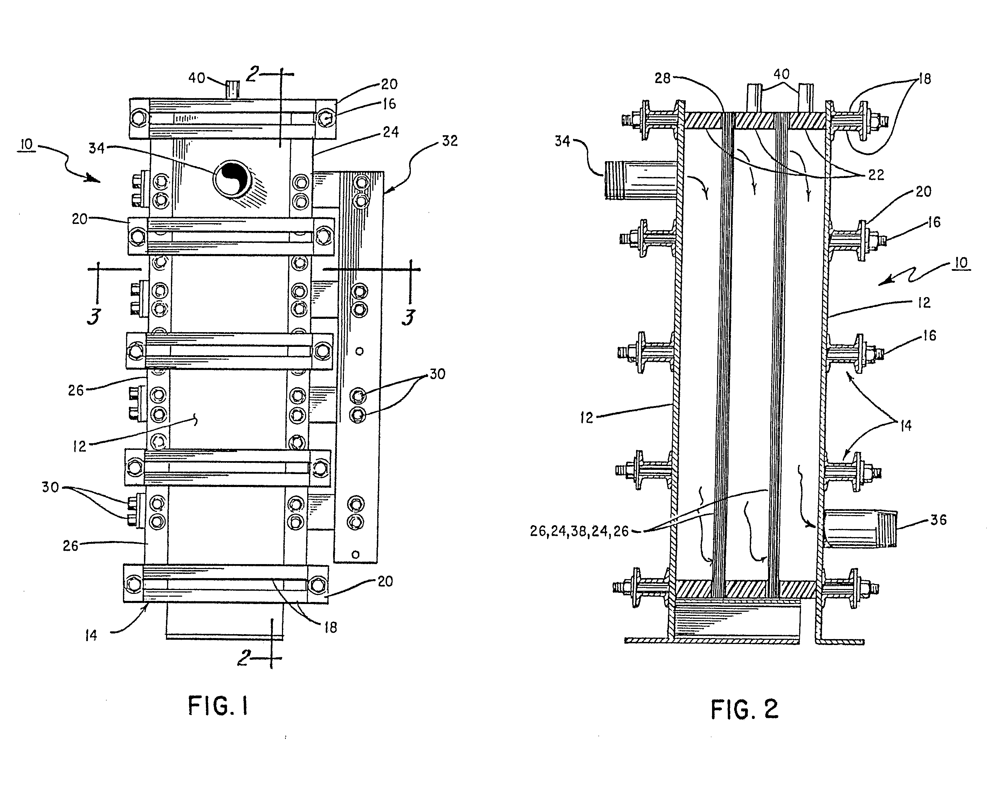

㊼ A stack pack type of electrolytic cell, suitable for the generation of chlorates or hypochlorites of sodium or potassium, is disclosed. Such materials are useful for the treatment of water effluents, but varying demand raises problems which known production apparatus cannot deal with. The cell (10) of the invention has the ability to make economical use of materials, while eliminating the necessity for large external studs for the electrode components, housings to retain fluids and intercell piping connections, since the cell can easily be increased or reduced in capacity by adding or removing chambers and electrode stack packs to or from the cell itself or by adding or removing electrodes to or from the stack packs. The electrolytic cell proposed can utilize mass-produced components and can be assembled either in a monopolar or bipolar configuration, so as to make most efficient use of existing electrical supply equipment. Between end plates (12), chamber sections (22) alternate with electrode stack packs (24, 26, 38) to form the cell (10) and these units are compressed by tie rods (16) which engage cross members (14) in contact with the end plates (12), as shown in FIGURE 2 of the drawings.

FIG. 2

STACK PACK ELECTROLYTIC CELL

BACKGROUND OF THE INVENTION

The present invention relates generally to a stack pack construction of an electrolytic cell for the generation of chlorates or hypochlorites of sodium or potassium utilizing repeatable components which are mass-produced to build electrolytic cells having various capacities, in addition to having either a monopolar or bipolar configuration for efficient use of existing electrical supply equipment. More particularly, the present invention relates to an improved stack pack electrolytic cell for the production of sodium hypochlorite having repeatable chambers and electrode stack pack components, which can be mass-produced in the most efficient manner to build electrolytic cells of different capacities and various electrode configurations. This employs two end plates with structural cross members, which can be utilized with tie rods extending between such end plates to compress the chambers and stack packs therebetween. The various chambers which are utilized between these two end plates can be mass-produced by injection moulding or other plastics moulding operations to provide very uniform workpieces for the assembly of various sizes of electrolytic cells.

Active chlorine in the form of sodium hypochlorite has been used for some time as a biocidally active agent for the treatment of sewage, liquid effluents, water in swimming pools, cooling tower waters and drinking water. Generally, such treatment is effected by the use of rather large volumes of chemical compounds such as sodium hypochlorite or molecular chlorine, if available. The addition of such chemical compounds to provide the biocidal activity desired has become costly and it is likely that greater restrictions upon the traffic of

- 2 -

dangerous chemical products in the transportation networks of the world will necessitate on-site manufacture of such compounds or a different means by which treatment may be carried out. For some time now, it has been known that electrochemical methods of manufacture present one solution to this problem, due to their capability for small on-site production at a reasonable cost, greater ecological acceptability and potential for energy conservation. Furthermore, electrochemical methods of manufacture can generally be operated as closed systems, thereby allowing greater control over the discharge or escape of by-products or waste products from electrolytic cells, which may be environmentally undesirable. Electrolytic cells promise to be one of the most efficient means of utilizing electricity, which is likely to be used more in the future due to the rapidly rising costs and expected exhaustion of fossil fuels such as coal, gas and oil.

Where there are readily available supplies of salt water (brine), such as seawater, aqueous solutions of hypochlorite can be readily made by the electrolysis of such seawater. The problem has been that, with specified capacities of such seawater electrolytic cells, the storage of product compounds is often necessitated by the uneven usage of drinking water or the uneven production of sewage requiring treatment. Thus, one problem in the efficient use of electrolytic cells for these desirable purposes lies in sizing of such cells to suit the given capacity needs of each individual treatment plant, in order to contain the need for massive storage facilities, which in turn cause numerous problems and are best completely avoided. Very often in the past, an electrolytic cell having a small capacity was designed and built in such a way that several units each capable of forming a cell could be ganged together to provide the capacity necessary for any given operation. This, however, is inefficient in the use of materials such as electrode components in chambers and additional piping necessary for such cells, to the extent that costs can rapidly exceed economical commercial realization of the full potential of such an electrolytic chlorine generation system because of the number of equipment units associated therewith, especially for large volume operations.

Therefore, it would be exceedingly advantageous to develop an electrolytic cell system, for the generation of chlorate or hypochlorite from brine solutions, which can be adequately sized to suit various production capacities and can also be used in accordance with existing electrical supply equipment, thereby reducing substantially the cost of the use of such cells in the production of water treatment compounds.

It is, therefore, an object of the present invention to provide a stack pack electrolytic cell for the generation of chlorate or hypochlorite, which can be built to various capacities from mass-produced components and in either a bipolar or monopolar configuration, so as to provide the most economical cell construction for the generation of a given quantity of chlorate or hypochlorite.

This and other objects of the present invention, together with its many advantages over existing and prior art forms, which will become apparent to those skilled in the art from the detailed disclosure of the present invention as set forth hereinbelow, are accomplished by the improvements herein shown and described.

## SUMMARY OF THE INVENTION

A stack pack electrolytic cell for the production of chlorates or hypochlorites, according to this invention, comprises two end plates each having a plurality of structural cross members extending beyond their edges, tie rods interconnecting the overextending parts of the cross members in order to compress internal components of the cell in liquid-tight manner between the respective end plates, two or more chamber sections disposed in sealing engagement between the end plates, at least one electrode stack pack disposed between adjacent chamber sections, each electrode stack pack containing at least one foraminous anode having an electrocatalytically-active coating thereon and a number of metallic sheet cathodes equal to the number of foraminous anodes plus one, each cathode having at least one aperture therein so as to permit electrolyte flow throughout the electrode stack pack and serving as a separator between adjacent chamber sections, whereby electrolyte flow for cleaning the electrolytic cell of deposits is allowed, and at least one port for the removal of hydrogen gas from the electrolytic cell.

It has been found that a stack pack electrolytic cell as just defined, when appropriately assembled and operated, i.e. with a brine supply and when connected to a source for providing a direct electrical current between the anodes and the cathodes, can be successfully and efficiently employed for the production of chlorates or hypochlorites. Moreover, the cell can be easily made larger or smaller to suit changing requirements, so that production capacity can be rapidly adapted to varying levels of demand for water treatment by use of the cell.

The preferred embodiment of the stack pack electrolytic cell for the production of sodium hypochlorite is shown by way of example in the accompanying drawings without attempting to show all the various forms and modifications in which the invention might be embodied; the invention being measured by the appended claims, and not the details of this disclosure.

BRIEF DESCRIPTION OF THE DRAWINGS

FIGURE 1 is an end elevation view of a stack pack electrolytic cell for the production of chlorates or hypochlorites according to the concepts of the present invention.

FIGURE 2 is a side section view of the stack pack electrolytic cell taken substantially along line 2-2 of FIGURE 1.

FIGURE 3 is a top section view of the stack pack electrolytic cell taken substantially along line 3-3 of FIGURE 1.

FIGURE 4 is an elevation view of a typical anode to be utilized in such a stack pack electrolytic cell.

FIGURE 5 is an elevation view of a typical inside cathode to be utilized in such a stack pack electrolytic cell.

FIGURE 6 is an elevation view of a typical outside cathode to be utilized in such a stack pack electrolytic cell.

DESCRIPTION OF THE PREFERRED EMBODIMENT

Referring particularly to FIGURES 1, 2 and 3 of the drawings, numeral 10 refers generally to a stack pack electrolytic cell according to the concepts of the present invention. Such a cell 10, as clearly shown in FIGURE 1, has an enclosure made up of two end plates 12, which have overextending structural cross members 14, i.e. the latter extend beyond the edges of the end plates 12, and these cross members 14 are utilized with tie rods 16, which interconnect the cross members 14 associated with one end plate 12 with the cross members 14 associated with the other, so as to provide the clamping force required to produce a closed, i.e. liquid and gas tight, cellular structure for the cell 10. The end plates 12 must be made of a suitable material to resist the caustic conditions of the interior of the electrolytic cell. Generally acceptable materials include, for instance, plastics and metals such as steel. The cross members 14 provide the requisite structural integrity for the electrolytic cell 10 and thus must be made of sufficiently mechanically strong material as to resist bending and warpage. A preferred material is steel. As can be readily seen in FIGURE 2, it is convenient to build each of the cross members 14 out of two pieces of steel channel 18 welded back to back, i.e. with their smooth faces toward each other, so as to provide an intermediate space to journal the tie rods 16 therethrough. Furthermore, to tie the ends of the channels 18 of each of the cross members 14 together and to provide an opening particularly suitable for receiving the tie rod 16, a flat plate 20 is welded to the two pieces of steel channel 18 and also provides a flat, smooth bearing surface for each tie rod 16 and its associated washer and nut, in the assembly of the electrolytic cell 10. With this form of construction, it is convenient for tie rods 16 of various lengths to be provided, so that cells 10 of various sizes and therefore capacities can be built, with adequate and smooth bearing surfaces provided by the plates 20 for the compression of the various components forming the electrolytic cell 10. Such a cell 10 in assembled condition can be clearly seen in FIGURE 2 and is capable of mass production, since the exact same design of end plate 12 and all the other component units will be utilized for all cells of this general nature making it readily possible to build stack pack electrolytic cells 10 according to different capacities as dictated for different production needs.

Located between the end plates 12, are two or more chamber sections 22. As seen in FIGURE 2 of the drawings, three such chamber sections 22 are present in the cell 10. However, depending upon the production capacity required for a given cell, any number of chamber sections 22 are disposed between the end plates 12 utilizing extended tie rods 16 to build larger electrolytic cells 10 according to the concepts of the present invention. These chamber sections 22 are rectangular in shape, similar to the end plates 12 as seen in FIGURE 1, and are such as to be capable of mass production, e.g. by injection-moulding, so that the chamber sections 22 can be produced to a uniform design and in a reasonably economical manner. Therefore, it is convenient to make these chamber sections 22 out of a plastics material which is resistant to the corrosive conditions in the electrolytic cell 10. However, it is not beyond the concepts of the present invention to utilize internal chamber sections 22 made of various other materials such as metals, e.g. steel. A preferred material for the chamber sections 22, based upon chemical resistivity and ease of injection moulding, is a polyvinyl chloride material.

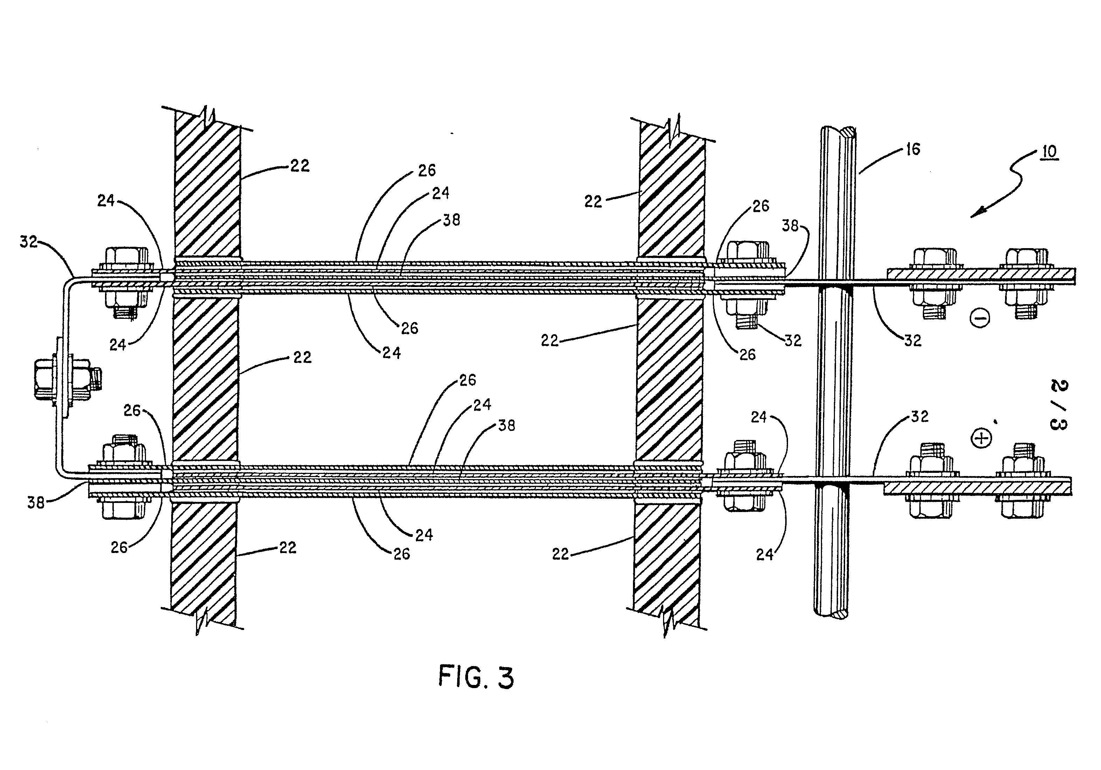

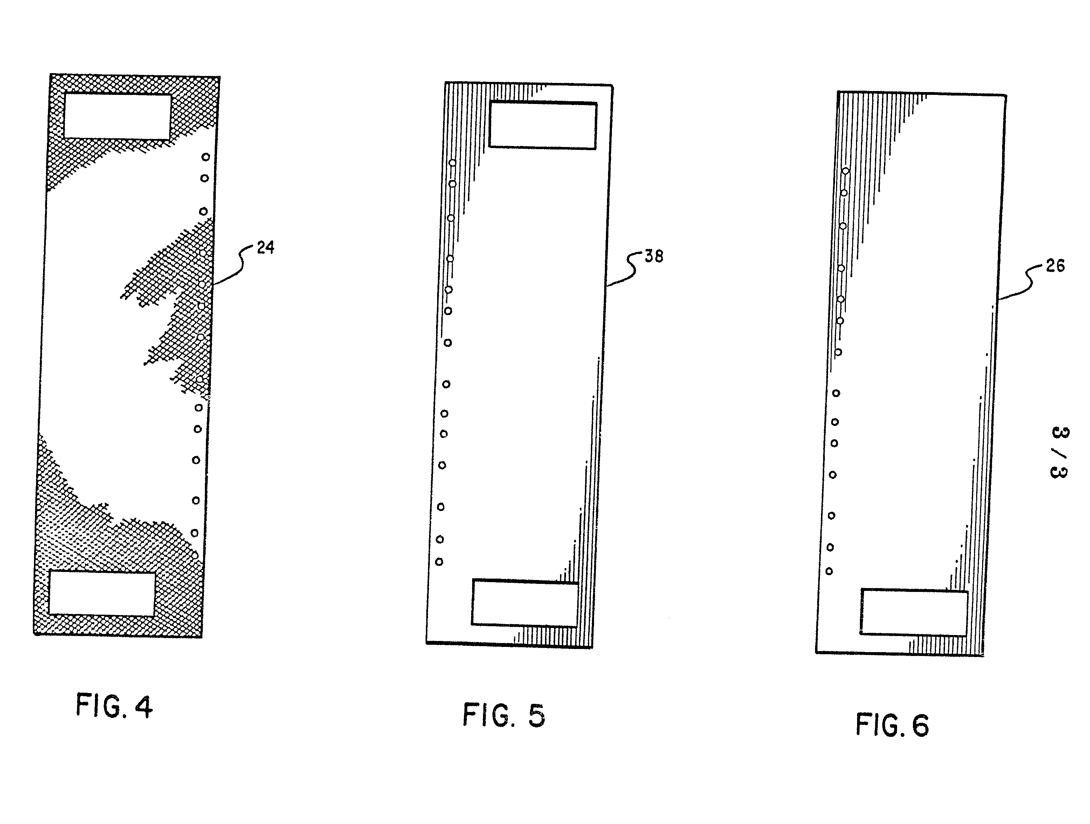

As can be seen in FIGURE 3, interposed between each pair of adjacent chamber sections 22 are several anodes 24 and cathodes 26 and 38 along with associated gasketing 28 to provide what is defined hereinafter as one of the electrode stack packs incorporated in the electrolytic cell 10. In the simplest cell construction, one electrode stack pack is interposed between two of the chamber sections 22, though in the cell 10 shown in FIGURE 2, the three chamber sections 22 are assembled with two of the electrode stack packs. It should be noticed that in each case a cathode 26 is on the outside of each given stack pack of anodes 24 and cathodes 26, so that in use both sides of each anode 24 are utilized electrolytically for the production of chlorates or hypochlorites. This makes the best possible effective use of the expensive anode material. Each stack pack as shown in FIGURE 3 consists of two outside cathodes 26, two anodes 24 and a central cathode 38. These are shown in detail in FIGURES 6, 4 and 5 respectively and are further described below. Furthermore, the cathodes 26 when utilized in this manner form separators between the given units, so as to ensure the proper flow through the electrolytic cell 10 for the production of chlorates or hypochlorites. In each case, the anodes 24 of each electrode stack pack extend beyond the boundaries of the electrolytic cell 10 in one direction, and the cathodes 26 and 38 extend beyond the boundaries of the electrolytic cell 10 in the other direction. This is so that electrical contact can be made utilizing bolting arrangements such as bolts 30 to ensure proper electrical connection with the bus network 32 to an appropriate electrical power supply. Furthermore, by carefully arranging the externally extending portions of the anodes 24 and the cathodes 26 and 38, it is easy to build either a bipolar arrangement, as seen in FIGURE 3, or a monopolar arrangement by having all of the anodes 24 of one electrode stack pack overextend in one direction of the cell 10 and all the cathodes 26 of the next electrode stack pack overextend in the other direction of the cell 10 for appropriate electrical connection. In FIGURE 3, the anodes 24 overextend to the left on the top stack pack and the cathodes 26 and 38 overextend to the left on the bottom stack pack to provide electrical connection to the bus network 32 between the anodes 24 of one stack pack and the cathodes 26 and 38 of another stack pack, thus constructing this electrolytic cell 10 in a bipolar configuration. In this manner, depending upon the existing electrical supply equipment available, the cell can be constructed so as to best utilize that equipment by employing a bipolar configuration to attain higher voltages or a monopolar configuration to attain lower voltages.

Further detail of the anodes 24 can be clearly seen in FIGURE 4 of the drawings, the anode being shown as having a foraminous or expanded metal mesh-type construction having a spaced series of apertures along one edge thereof to extend beyond the boundaries of the electrolytic cell 10 for appropriate electrical connection. It can also be seen in FIGURE 1 that the appropriate electrical connection is spaced between the overextended parts of the cross members 14 as shown in FIGURE 1 so as to provide no interference with the tie rods 16 connecting the sections of the electrolytic cell 10. It is contemplated in the electrolytic cell 10 according to the concepts of the present invention that the anodes 24 will be constructed of any conventional electrically-conductive electrocatalytically-active material resistant to the anolyte such as a valve metal like titanium or tantalum or alloys thereof, bearing on the surface a noble metal, a noble metal oxide (either alone or in combination with a valve metal oxide) or other electrocatalytically-active corrosion-resistant materials. Anodes of this class are called dimensionally-stable anodes and are well-known and widely used in the industry today. Examples of such coating compositions include the Beer coatings according to U.S. Patent Specifications Nos. 3711385, 3751296 and 3933616. Further examples of appropriate coating systems include those disclosed in U.S. Patent Specifications Nos. 3776834, 3855092, 3875043, 3878083, 4028215 and 4040939. A preferred valve metal for the material based upon cost, availability and electrical and chemical properties is titanium. It is important, however, that the anodes be constructed of a foraminous material so as to ensure easy flow through the whole structure of the anode 24 itself. It is preferred, if titanium expanded metal mesh is utilized for the anodes 24, that it is flattened for ease of installation.

The gasketing material 28 is generally necessary and is preferably provided to seal the cell and so ensure against leakage of the electrolyte material. The gasketing material 28 can be made of any elastomeric material which will withstand the chemical surroundings of the stack pack electrolytic cell 10. A preferred gasketing material is natural rubber having a durometer measurement of 40, which can be compressed slightly into the anode mesh or can even be moulded into the mesh. In the alternative, the gasketing material 28 can be glued to the cathode plate for compression into the anode mesh. Furthermore, to maintain a given electrode gap and prevent chemical crystal buildup on the gasketing material 28 around the inactive areas, a plastics spacer ring may be placed on the internal perimeter of the gasketing material 28. A suitable substance for such a spacer is a polyvinyl chloride material.

As shown in FIGURES 5 and 6, the cathodes have one or other of two basic designs. The materials utilized for the construction of the cathodes will generally be metal sheet material including any conventional electrically-conductive material resistant to the electrolyte, such as iron, mild steel, stainless steel, nickel, stainless steel clad copper or nickel clad copper. It has been found in the present instance that the cathodes 26 are preferably made of a nickel/molybdenum/chrome alloy. Such an alloy can be purchased commercially from Cabot Corporation under the trademark HASTELLOY C. Nickel and nickel-chrome alloys perform well also. It is important that the cathodes 26 are made of sheet material, since they then constitute separators and ensure electrolyte flow through the electrolytic cell 10 for the production of sodium hypochlorite. As can be seen in FIGURE 5, a cathode to be utilized as the central cathode 38 in an electrode stack pack has apertures at either end for electrolyte flow therethrough. However, as shown in FIGURE 6, the other design of cathode, to be utilized as the outside cathodes 26, has an aperture at one end only, so as to control the flow in one direction.

It is preferable for each electrode stack pack to have the outside face of each outside cathode 26 covered with an electrically nonconducting material to prevent any current leakage between adjacent electrode stack packs in the electrolytic cell 10. This can be accomplished by inserting a thin plastics film over the outside of each electrode stack pack or the gasketing material 28 need only be cut out for the apertures of the cathodes 26.

Those skilled in the art will also note that each electrode stack pack must have at least one foraminous anode 24 with an electrocatalytically-active coating thereon and a number of cathodes 26 equal to the number of anodes 24 plus one. If more than one anode 24 is used then there will be a number of central cathodes 38 at least equal to the number of anodes 24 minus one. The electrode stack packs themselves may contain any number of anodes and cathodes as desired for production purposes in addition to having any desired number of electrode stack packs in the electrolytic cell 10.

Thus, as seen in FIGURE 2, the flow from the feed side, represented by an inlet 34 in one of the end plates 12, will enter at the top of the cell, travel to the bottom of the first chamber section 22 where it will enter the electrode stack pack through the aperture in the outer cathode 26 and then flow up along the central cathode 38 having apertures at each end and out at the top into the next succeeding chamber 22, where it will again flow to the bottom and start the process over again. This ensures sequential flow through the entire assembly of chamber sections and electrode stack packs, to give the most efficient production of sodium hypochlorite. This also permits continuous cleaning of the cell by reason of the electrolyte flow through the cell. Furthermore, it should be noted that each of the openings in the cathodes, as shown in FIGURES 5 and 6, preferably have their leading edges polished so as to avoid Eddy currents which are detrimental to the current efficiency of the electrolytic cell 10. It can also be seen in FIGURES 5 and 6 that the cathodes 26 and 38, like the anodes 24, each have an overextended punched out portion for receiving the bolts 30 and other components of the bus network 32 for connection to the source for supply of the necessary electrical current.

In the operation of the cell for the production of sodium hypochlorite from seawater, the electrolyte flow is used to keep the anodes 24 and cathodes 26 and 38 clean of deposits. It is important that the flow through the cell constructed as shown and described exceeds 0.6 m/min (2 feet per minute) to provide this cleaning action, as this results in extended lifetimes of the electrolytic cell in the production of sodium hypochlorite. It is also possible to use electrolytic cells constructed according to the principles of the present invention for the production of chlorates. For the production of chlorates or potassium hypocholorite from a pure brine feed, the flow rate will be less critical since there are fewer substances present in the brine capable of causing deposit buildup. Also, preferred operation for hypochlorite production generally is at about room temperature, the input of seawater being made without heating or cooling. The temperature of operation preferred for chlorate production is much higher, usually being in the range from $60^{\circ}$ to $90^{\circ}$C, and the pH of the brine feed should desirably be maintained in the range from 6.5 to 7.5. The interelectrode gap of the electrode stack packs can be smaller for chlorate production.

Thus, it will be apparent from the foregoing description of the preferred embodiment that the stack pack electrolytic cell 10 shown and described herein accomplishes the objects of the invention and solves the problems with which the invention is concerned.

CLAIMS:

1. A stack pack electrolytic cell for the production of chlorates or hypochlorites, which comprises two end plates each having a plurality of structural cross members extending beyond their edges, tie rods interconnecting the overextending parts of the cross members in order to compress internal components of the cell in liquid-tight manner between the respective end plates, two or more chamber sections disposed in sealing engagement between the end plates, at least one electrode stack pack disposed between adjacent chamber sections, each electrode stack pack containing at least one foraminous anode having an electrocatalytically-active coating thereon and a number of metallic sheet cathodes equal to the number of foraminous anodes plus one, each cathode having at least one aperture therein so as to permit electrolyte flow throughout the electrode stack pack and serving as a separator between adjacent chamber sections, whereby electrolyte flow for cleaning the electrolytic cell of deposits is allowed, and at least one port for the removal of hydrogen gas from the electrolytic cell.

2. A stack pack electrolytic cell according to claim 1, wherein the electrode stack packs are connected in bipolar configuration.

3. A stack pack electrolytic cell according to claim 1, wherein the electrode stack packs are connected in monopolar configuration.

4. A stack pack electrolytic cell according to any preceding claim, wherein each anode and cathode extends beyond the boundaries of the chamber sections, so as to permit connection to a source of direct electrical current.

5. A stack pack electrolytic cell according to any preceding claim, wherein gasketing material is placed between adjacent components and the liquid-tight arrangement is accomplished by compressive forces exerted by the tie rods and the end plate structural cross members upon such gasketing material.

6. A stack pack electrolytic cell according to any preceding claim, wherein the or each electrode stack pack comprises a first outside cathode, an anode, an inside cathode, an anode and a second outside cathode.

7. A stack pack electrolytic cell according to claim 6, wherein each outside cathode has an aperture adjacent an end thereof.

8. A stack pack electrolytic cell according to claim 6 or 7, wherein the inside cathode has an aperture at each end thereof.

9. A stack pack electrolytic cell according to claim 7 or 8, wherein the leading edges of the cathode apertures are polished.

10. A stack pack electrolytic cell according to any preceding claim, wherein the outside face of each electrode stack pack is covered with an electrically nonconducting material, to prevent current leakage between adjacent electrode stack packs.

FIG. I

FIG. 2

FIG. 3

FIG. 4

FIG. 5

FIG. 6

24

38

26

3/3

0011423